# EUROPEAN PATENT SPECIFICATION

(11) **EP 2 360 085 B1**
(45) Date of publication and mention of the grant of the patent: **03.04.2013**
(21) Application number: 11153857.5
(22) Date of filing: 09.02.2011
(51) Int. Cl.: B62D 55/04, B62D 55/125

(54) **Tracked unit for a ground work vehicle**
Raupeneinheit eines Bodenarbeitsfahrzeugs
Unité de chenille pour véhicule de travail terrestre

(30) Priority: 24.02.2010 IT MI20100297
(43) Date of publication of application: 24.08.2011
(73) Proprietor: Tidue S.R.L., 25010 Remedello (BS) (IT)
(72) Inventor: Canossa, Riccardo, 46036 Revere MN (IT)
(74) Representative: Modiano, Micaela Nadia

(56) References cited:
- EP-A1- 2 036 802
- WO-A2-2008/073990
- US-A1- 2005 035 650

## Description

The present invention relates to a tracked unit for a ground work vehicle. Document EP 2 036 802 A1 discloses at tracked unit according to the preamble of claim 1.

It is well known that during the use of many ground work vehicles, for example vehicles that harvest agricultural products such as combine harvesters, it becomes necessary, for operational reasons associated with the nature of the terrain and with the type of operation to be performed, to alternately fit ordinary wheels or tracked units onto the ends of at least one axle, such tracked units typically comprising a structure for supporting a drive wheel that moves a track which is in contact with idler wheels and with rollers for resting on the ground which are associated with the supporting structure.

Such work vehicles are provided with a motor drive designed with such features as to give the vehicles translation speed values that are correct when the vehicles are in the configuration in which wheels are fitted, but it can happen that when the wheels are substituted with tracked units according to the known art, the translation speed available to the work vehicles is considerably reduced, as a result of the reduction of the diameter of the drive wheel of the tracked unit compared with the diameter of the wheels.

The aim of the present invention is to provide a tracked unit that can be fitted onto the end of an axle of a ground work vehicle as an alternative to an ordinary wheel, without interfering with the motor drive of the vehicle, and with reductions in the translation speed of the vehicle being substantially absent.

This aim is achieved by a tracked unit for a ground work vehicle, according to the invention, characterised in that it comprises the features disclosed in the appended claims.

Further characteristics and advantages of the invention will become better apparent from the description of a preferred, but not exclusive, embodiment thereof, illustrated by way of non-limiting example in the accompanying drawings wherein:

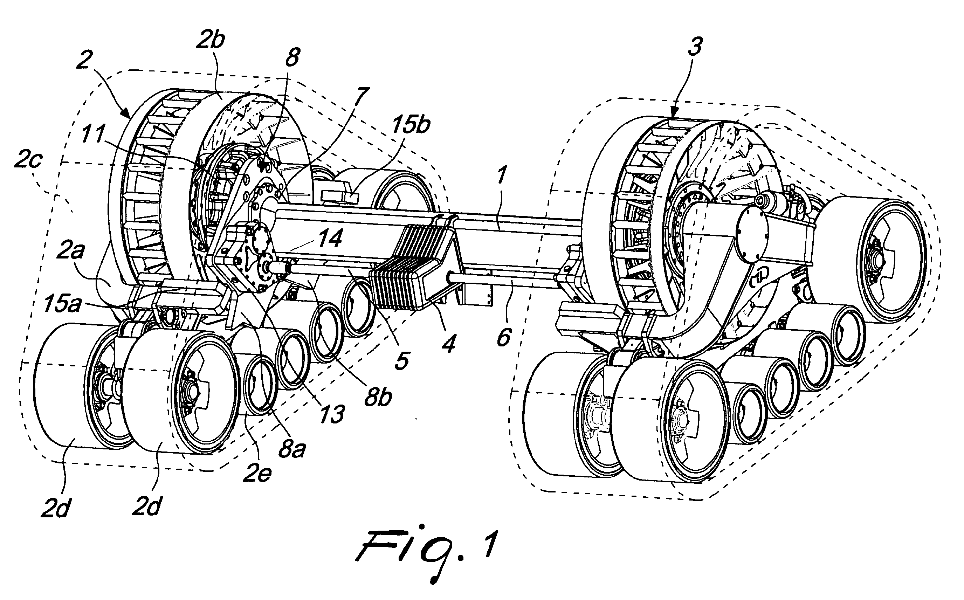

- Figure 1 is a perspective view of the front axle of a combine harvester provided with tracked units according to the invention;

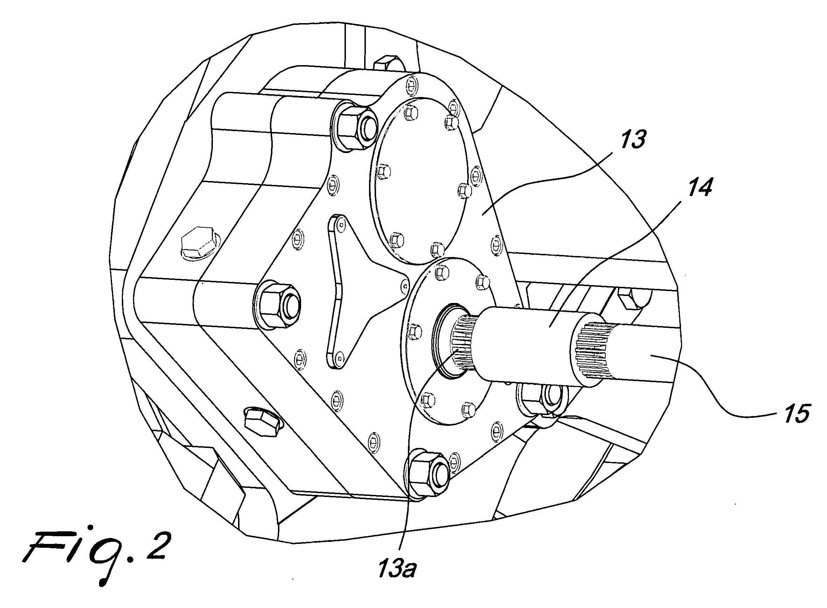

- Figure 2 is an enlarged view of the detail highlighted in figure 1;

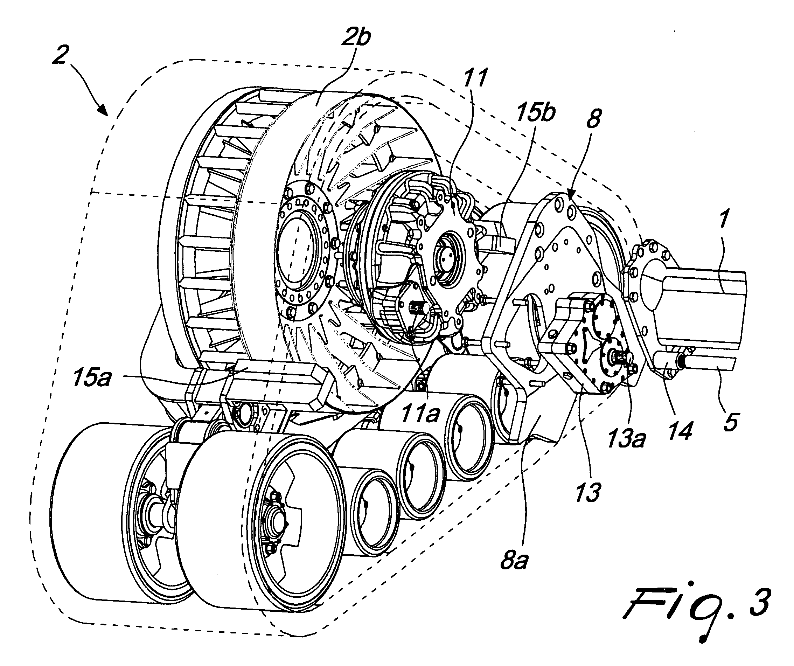

- Figure 3 is a view of one of the tracked units with some components exploded;

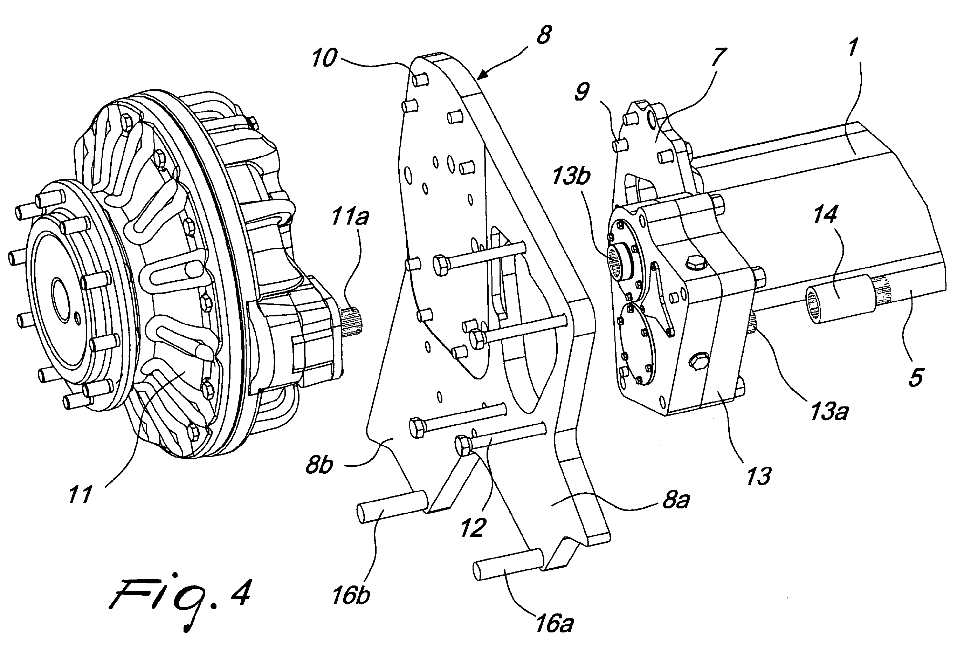

- Figure 4 is a view of the same components shown in exploded view in Figure 3 from a different viewpoint;

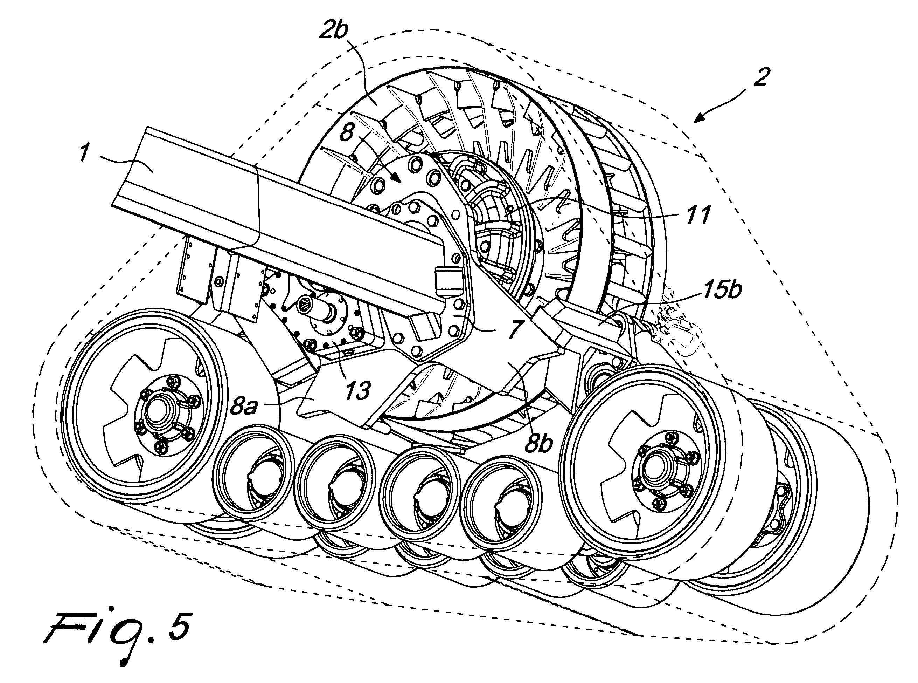

- Figure 5 is a view of the tracked unit shown in Figure 3, assembled, and seen from a different viewpoint.

With reference to the figures, the reference numeral 1 designates the axle of a work vehicle, and more precisely the front axle of a combine harvester, provided with two tracked units 2 and 3 and supports a drive assembly 4 which comprises a hydrostatic motor and a mechanical transmission system with gears and differential. Branching off from the drive assembly 4, two drive axle shaft sections 5 and 6 are provided which transmit the motion respectively to the tracked units 2 and 3.

The tracked units 2 and 3 are mirror-symmetrically identical, and therefore only the tracked unit 2 will be described which typically comprises a structure 2a for supporting a drive wheel 2b that moves a track 2c, in contact with idler wheels 2d and with rollers 2e for resting on the ground which are associated with the supporting structure.

The axle 1 is provided at its two ends with monolithically connected flanges 7 with associated final reduction units as will be better explained hereinafter, and which perform the function of supporting the tracked units 2 and 3 using methods that will be described in detail with regard to the connection between the flange 7 and the tracked unit 2. Such flanges 7 perform the function of supporting, as an alternative to the tracked units 2 and 3, ordinary wheels, which have the final reduction unit directly associated with the flange 7 in the configuration featuring the wheels that are designed to receive the motion from the axle shaft sections 5 and 6, the length of which can optionally be changed, derived from the drive assembly 4 which, in the move from the configuration featuring the tracked units to the configuration featuring the wheels does not undergo any change whatsoever, just as no change is undergone by the final reduction unit which is present in the two configurations.

The flange 7 is associated with a plate 8, and this association is achieved, as explained above, removably by means of screws 9.

The plate 8 is designed to support, by means of screws 10, a final reduction unit 11 directly associated with the drive wheel 2b of the tracked unit, and, by means of bolts 12, a step-up gear system 13 in which an input shaft 13a is connected by means of a sleeve 14 to the shaft section 5, and an output shaft 13b is connected, by means of a grooved profile, with an input shaft 11 a of the final reduction unit 11.

The presence of the step-up gear system 13 compensates for the reduction factor of the translation speed of the work vehicle in the configuration featuring the tracked units compared to the configuration featuring the wheels, which is caused by the reduction of the diameter of the drive wheel of the tracked units compared to the diameter of the ordinary wheels, and thus a substantial equality of the speed values in the two configurations is achieved.

A feature of the plate 8 to be highlighted consists in that it is shaped so as to achieve a height of the work vehicle from the ground that is substantially equal to the height that is achieved in the configuration featuring ordinary wheels fitted to the ends of the axle 1.

Moreover the plate 8 is provided with extensions 8a, 8b which are adapted to constitute, by coming into contact with abutment blocks 15a, 15b which are provided on the structure 2a of the tracked unit, stroke limiters in the oscillating motions of the tracked unit in adjusting to the ground.

Finally, on the plate 8 projections 16a, 16b are provided which are adapted to prevent maneuvers to fit ordinary wheels that would cause increases in the speed of the vehicle that are beyond the safety limits.

The invention described is susceptible of numerous modifications and variations, all of which are within the scope of the appended claims.

## Claims

1. A tracked unit for a ground work vehicle, comprising a structure (2a) for supporting a drive wheel (2b) which transmits motion to a track (2c) for resting on the ground, said tracked unit being designed to be fitted to a final reduction unit (11), which is located at one end of at least one axle (1) of said work vehicle, which is provided with a motor drive (4) to give said vehicle correct translation speed values in the configuration in which wheels are fitted at the ends of the axle (1), **characterized in that** it comprises a plate (8) adapted to be associated detachably with a flange (7) that is provided monolithically at the end of said axle (1), said plate (8) being adapted to support, at one face, the final reduction unit (11) directly associated with the drive wheel (2b) of the tracked unit and, at the other face, a step-up gear system (13), in which the input shaft (13a) is connected to the drive shaft of the motor drive system (4) with which the work vehicle is provided, while the output shaft (13b) is connected to the input shaft (11 a) of said final reduction unit (11).

2. The tracked unit according to claim 1, **characterized in that** the plate (8) adapted to be associated detachably with a flange (7) at the end of the axle (1) of the work vehicle is shaped so as to determine a height of the work vehicle, with respect to the ground, that is substantially equal to the height that occurs in the configuration in which wheels are fitted to the ends of said axle (1).

3. The tracked unit according to claim 1, **characterized in that** the plate (8) adapted to be associated detachably with a flange (7) at the end of the axle (1) of the work vehicle is provided with protrusions (8a, 8b) adapted to constitute, by coming into contact with abutment blocks (15a, 15b) that are present on the structure of the tracked unit, stroke limiters in the oscillating motions of said tracked unit.

4. The tracked unit according to claim 1, **characterized in that** the plate (8) adapted to be associated detachably with a flange (7) at the end of the axle (1) of the work vehicle is provided with projections (16a, 16b) adapted to prevent a maneuver for fitting a wheel that would cause speed increases of the vehicle beyond the safety limits.

## Patentansprüche

1. Eine Raupeneinheit für ein Bodenarbeitsfahrzeug, das eine Struktur (2a) zum Tragen eines Antriebsrads (2b) umfasst, welches Bewegung auf eine Raupe (2c) zum Aufliegen auf dem Boden umfasst, wobei die Raupeneinheit konstruiert ist, um auf eine Enduntersetzungseinheit (11) aufgesetzt zu werden, die sich an einem Ende mindestens einer Achse (1) des Arbeitsfahrzeugs befindet, das mit einem Motorantrieb (4) ausgestattet ist, um dem Fahrzeug in der Anordnung, in der Räder an den Enden der Achse (1) aufgesetzt sind, korrekte Translationsgeschwindigkeitswerte zu verleihen, **dadurch gekennzeichnet, dass** sie eine Platte (8) umfasst, die ausgebildet ist, um lösbar mit einem Flansch (7) verknüpft zu werden, der monolithisch am Ende der Achse (1) bereitgestellt ist, wobei die Platte (8) ausgebildet ist, um an einer Fläche die Enduntersetzungseinheit (11) zu tragen, und zwar direkt mit dem Antriebsrad (2b) der Raupeneinheit verknüpft, und an der anderen Fläche ein übersetzunggetriebesystem (13), in dem die Eingangswelle (13a) mit der Antriebswelle des Motorantriebssystems (4) verbunden ist, mit dem das Arbeitsfahrzeug ausgestattet ist, während die Abtriebswelle (13b) mit der Eingangswelle (11a) der Enduntersetzungseinheit (11) verbunden ist.

2. Die Raupeneinheit gemäß Anspruch 1, **dadurch gekennzeichnet, dass** die Platte (8), die ausgebildet ist, um lösbar mit einem Flansch (7) am Ende der Achse (1) des Arbeitsfahrzeugs verknüpft zu werden, geformt ist, um eine Höhe des Arbeitsfahrzeugs im Verhältnis zum Boden zu bestimmen, die im Wesentlichen gleich der Höhe ist, die in der Anordnung vorkommt, in welcher Räder auf die Enden der Achse (1) aufgesetzt werden.

3. Die Raupeneinheit gemäß Anspruch 1, **dadurch gekennzeichnet, dass** die Platte (8), die ausgebildet ist, um lösbar mit einem Flansch (7) am Ende der Achse (1) des Arbeitsfahrzeugs verknüpft zu werden, mit vorsprüngen (8a, 8b) versehen ist, die ausgebildet sind, um, indem sie in Kontakt mit Widerlagerblöcken (15a, 15b) kommen, welche an der Struktur der Raupeneinheit vorhanden sind, Hubbegrenzer in den oszillierenden Bewegungen der Raupeneinheit zu bilden.

4. Die Raupeneinheit gemäß Anspruch 1, **dadurch gekennzeichnet, dass** die Platte (8), die ausgebildet ist, um lösbar mit einem Flansch (7) am Ende der Achse (1) des Arbeitsfahrzeugs verknüpft zu werden, mit Vorsprüngen (16a, 16b) ausgestattet ist, die ausgebildet sind, um ein Manöver zum Aufsetzen eines Rades zu verhindern, das Geschwindigkeitserhöhungen des Fahrzeugs über die Sicherheitsbeschränkungen hinaus verursachen würde.

## Revendications

1. Unité chenillée pour un engin terrestre comprenant une structure (2a) de support d'une roue motrice (2b) qui transmet le mouvement à une chenille (2c) pour adhérer au sol, ladite unité chenillée étant destinée à être montée sur une unité de réduction finale (11) qui est située à une extrémité d'au moins un axe (1) dudit engin, lequel est équipé d'un entraînement par moteur (4) pour donner audit engin des valeurs de vitesse de translation correctes dans la configuration, dans laquelle des roues sont montées aux extrémités de l'axe (1), **caractérisée en ce qu'**elle comprend une plaque (8) adaptée à être associée de manière amovible à une bride (7) prévue de façon monolithique à l'extrémité dudit axe (1), une face de ladite plaque (8) étant adaptée de manière à supporter l'unité de réduction finale (11) associée directement à la roue motrice (2b) de l'unité chenillée et, l'autre face étant adaptée de manière à supporter un système multiplicateur de vitesse (13), dans lequel l'arbre d'entrée (13a) est relié à l'arbre moteur du système d'entraînement par moteur (4), dont l'engin est équipé, alors que l'arbre de sortie (13b) est relié à l'arbre d'entrée (11a) de ladite unité de réduction finale (11).

2. Unité chenillée suivant la revendication 1, **caractérisée en ce que** la plaque (8), adaptée à être associée de manière amovible à une bride (7) à l'extrémité de l'axe (1) de l'engin, est formée de manière à déterminer la hauteur de l'engin par rapport au sol, hauteur, qui est essentiellement égale à la hauteur obtenue dans la configuration, dans laquelle des roues sont montées aux extrémités dudit axe (1).

3. Unité chenillée suivant la revendication 1, **caractérisée en ce que** la plaque (8), adaptée à être associée de manière amovible à une bride (7) à l'extrémité de l'axe (1) de l'engin, est pourvue de saillies (8a, 8b) adaptées, en entrant en contact avec des blocs de butée (15a, 15b) présents sur la structure de l'unité chenillée, de manière à constituer des limiteurs de coups dans les mouvements oscillatoires de ladite unité chenillée.

4. Unité chenillée suivant la revendication 1, **caractérisée en ce que** la plaque (8), adaptée à être associée de manière amovible à une bride (7) à l'extrémité de l'axe (1) de l'engin, est pourvue de saillies (16a, 16b) adaptées de manière à empêcher une manoeuvre de montage d'une roue qui occasionnerait des augmentations de vitesse au-delà des limites de sécurité.
